# EUROPÄISCHE PATENTSCHRIFT

(11) **EP 1 000 825 B1**
(45) Veröffentlichungstag und Bekanntmachung des Hinweises auf die Patenterteilung: **05.01.2005**
(21) Anmeldenummer: 99120684.8
(22) Anmeldetag: 19.10.1999
(51) Int. Cl.: B60R 25/00, B60R 25/10

(54) **Identifizierungseinrichtung für den Benutzer eines Fahrzeugs**
Identification device for a vehicle user
Dispositif d'identification pour l'utilisateur d'un véhicule

(30) Priorität: 12.11.1998 DE 19852223
(43) Veröffentlichungstag der Anmeldung: 17.05.2000
(73) Patentinhaber: Bayerische Motoren Werke Aktiengesellschaft, 80809 München (DE)
(72) Erfinder: Bartz, Rüdiger, 80809 München (DE)

(56) Entgegenhaltungen:
- EP-A- 0 449 471
- DE-C- 19 643 020
- US-A- 5 370 201
- US-A- 5 535 844

## Beschreibung

Die Erfindung bezieht sich auf ein Verfahren zum Prüfen einer Zugangsberechtigung zu einem Fahrzeug.

In diesem Zusammenhang ist es aus der DE 196 43 020 C bekannt, mittels eines Mobiltelefons einen Zugangscode in Form eines Freigabecodes zum Fahrzeug zu senden, wobei es sich bei dem Freigabecode um das Identifikationssignal des Mobiltelefons im Telefonnetz handelt. Eine Einrichtung im Fahrzeug erteilt eine Wegfahrberechtigung, wenn der Zugangscode mit im Fahrzeug abgespeicherten Werten für den Zugangscode übereinstimmen. Der Freigabecode ist in einem Transponder im Mobiltelefon gespeichert.

Die Erfindung beschäftigt sich insbesondere mit dem dabei bestehenden Problem der Zuordnung von Transponder, mobiler Informations- und Kommunikationseinrichtung und Fahrzeug. Das Problem ergibt sich dann, wenn wie bei der DE 196 43 020 C die mobile Informations- und Kommunikationseinrichtung mit einem hinsichtlich seines Dateninhalts festen Transponder für die Zugangs- und Fahrberechtigung für das Fahrzeug verwendet wird. Die Freischaltung und auch die Sperrung der Einheit nur am Fahrzeug, d.h. in Verbindung mit Fahrzeug-Benutzungshandlungen stellt einen Schwachpunkt für den Diebstahlschutz dar, da dann die Möglichkeit für einen unberechtigten Benutzer bestünde, den Dateninhalt seiner Einheit unbemerkt für den berechtigten Benutzer einzulesen und sich damit die Zugangsberechtigung zu verschaffen. Auch ist es für den (berechtigten) Benutzer nicht zumutbar, beim Verkauf des Fahrzeugs die mobile Informations- und Kommunikationseinrichtung gleich mit abzugeben.

Der Erfindung liegt die Aufgabe zugrunde, ein Verfahren der eingangs genannten Art zu schaffen, bei dem die Zuordnung von Transponder, mobiler Informations- und Kommunikationseinrichtung und Fahrzeug eindeutig ermöglicht wird.

Diese Aufgabe wird für das Verfahren mit den im Patentanspruch 1 angegebenen Merkmalen gelöst.

Das Erteilen der Zugangsberechtigung ist somit vom Berechtigungscode und vom Identifizierungscode abhängig. Der Transponder überträgt beide Codes an das Fahrzeug. Dazu wird der Identifizierungscode von einem Speicher der mobilen Informations- und Kommunikationseinrichtung in einen flüchtigen Speicher des Transponders übertragen. Eine Einrichtung im Fahrzeug erteilt die Zugangsberechtigung, wenn sowohl der Berechtigungscode als auch der Identifizierungscode mit im Fahrzeug abgespeicherten Werten für den Berechtigungscode und den Identifizierungscode übereinstimmt.

Vorteilhafte Weiterbildungen der Erfindung beschäftigen sich mit dem Problem des Synchronisierens von mobiler Informations- und Kommunikationseinrichtung und Fahrzeug. Da dieses Problem grundsätzlich ist und bereits bei der ersten Inbetriebnahme des Fahrzeugs besteht, ist eine Lösung hierfür im folgenden näher erläutert. Der Benutzer kann einen mit einem fahrzeugindividuellen Berechtigungscode versehenen, d.h. z.B. einen mit Fahrzeugdaten programmierten Transponder von einem Fahrzeughändler beziehen unter den gleichen Bedingungen, unter denen er auch einen Ersatzschlüssel erhält, z.B. durch Vorlage von Personalausweis und Fahrzeugschein. In einem Fachgeschäft kann er die entsprechende mobile Informations- und Kommunikationseinrichtung erwerben. Wesentlich dabei ist, dass die Einheit mit einem individuellen Identifizierungscode, z.B. mit einer werksseitigen PIN-Nummer oder z.B. auch einer Seriennummer versehen ist.

Clipst nun der Benutzer den Transponder in die Informations- und Kommunikationseinheit ein, z.B. in einen Container im Batteriefach, so wird mittels einer Kontaktierung der Transponder mit Energie aus dem Energiespeicher der Einheit versorgt, danach selbsttätig aus dem Logikteil der Einheit den Identifizierungscodeauslesen und im Transponder in einem flüchtigen Speicher (RAM) ablegen.

Dem Fahrzeug kann diese Einheit dann dadurch zugeordnet werden, indem z.B. mittels eines mechanischen Fahrzeugschlüssels das Fahrzeug geöffnet bzw. in Betrieb gesetzt wird und anschließend eine Transponderabfrage gestartet wird. Hierbei überträgt der Transponder neben seinem Berechtigungscode auch den Identifizierungscode, die beide im Fahrzeug gespeichert werden. Werden bei einem erneuten Zutritt wieder die beiden Codes übertragen, erkennt das Fahrzeug den Benutzer als berechtigt. Die beschriebene Identifizierung des Benutzers ist manipulationssicher, da die Speicherung des Identifizierungscodes nur dann erfolgt, wenn mit diesem auch der fahrzeugindividuelle Berechtigungscode übertragen wird.

Wird der Energiespeicher der mobilen Informations- und Kommunikationseinrichtung gewechselt, geht zwar der Inhalt des flüchtigen Speichers verloren, ein Zutritt zum Fahrzeug ist aber in der geschilderten Weise ohne Beeinträchtigung möglich. Bei Aktivierung des Energiespeichers wird der Identifizierungscode in den RAM des Transponders eingelesen. Bei der Abfrage durch das Fahrzeug wird dieser wieder zusammen mit dem Berechtigungscode aus dem Transponder ausgelesen und im Fahrzeug anhand des dort weiterhin vorgehaltenen, von dem früheren Synchronisierungsvorgang her bekannten Identifizierungscode wiedererkannt.

Wird das Fahrzeug veräußert, wird der Transponder an den neuen Besitzer übergeben. Dieser kann ihn in seine mobile Informations- und Kommunikationseinrichtung einsetzen, die einen individuellen Identifizierungscode besitzt. Der neue Benutzer weist mittels des mechanischen Schlüssels seine Zutrittsberechtigung nach. Nachdem zuvor beim Einsetzen des Transponders der Identifizierungscode in den RAM des Transponders eingelesen wurde, kann dieser bei der Abfrage durch das Fahrzeug zusammen mit dem unveränderten und weiterhin gültigen Berechtigungscode aus dem Transponder ausgelesen und im Fahrzeug gespeichert werden. Der Benutzer kann somit beim Veräußern des Fahrzeugs die Einheit behalten.

Wird das Fahrzeug veräußert, wird der Transponder an den neuen Besitzer übergeben. Dieser kann ihn in seine mobile Informations- und Kommunikationseinrichtung einsetzen, die einen individuellen Identifizierungscode besitzt. Der neue Benutzer weist mittels des mechanischen Schlüssels seine Zutrittsberechtigung nach. Nachdem zuvor beim Einsetzen des Transponders der Identifizierungscode in den RAM des Transponders eingelesen wurde, kann dieser bei der Abfrage durch das Fahrzeug zusammen mit dem unveränderten und weiterhin gültigen Berechtigungscode aus dem Transponder ausgelesen und im Fahrzeug gespeichert werden.

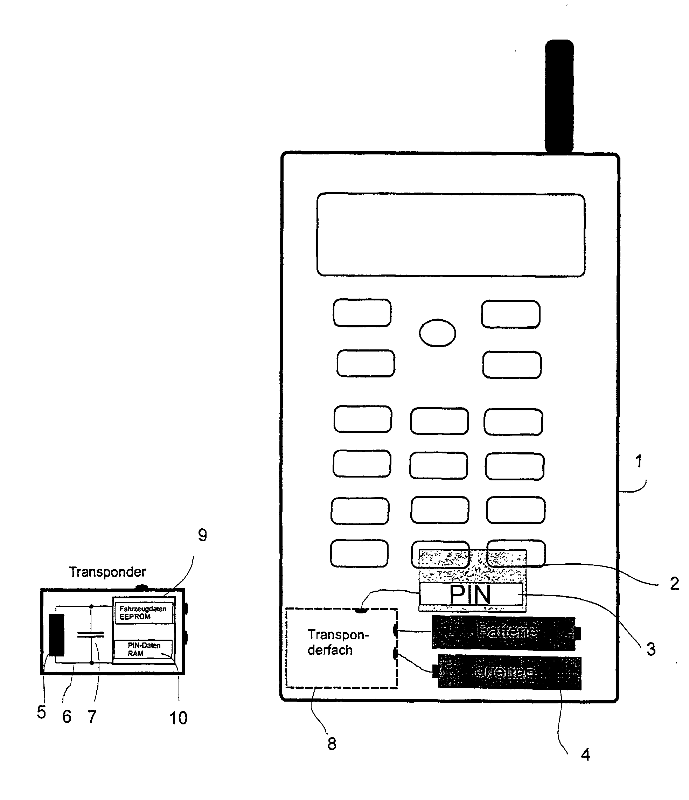

Anhand der Zeichnung ist die Erfindung weiter erläutert. In der einzigen Figur ist schematisch der Aufbau einer mobilen Informations- und Kommunikationseinrichtung gezeigt, mittels der der Zugang und/oder die Inbetriebnahme eines Fahrzeugs möglich ist.

Ein Mobiltelefon 1 enthält einen Logikteil 2 mit einem festen Speicher 3, in dem sich ein Identifizierungscode (PIN) befindet. Ferner besitzt das Mobiltelefon einen Energiespeicher 4, eine Antenne 5 und einen zugehörigen Schwingkreis 6, in dem sich ein Kondensator 7 befindet. In einer Aufnahme 8 ist ein Transponder 9 mit einem flüchtigen Speicher (RAM) 10 einsteckbar, der ferner einen fahrzeugindividuellen Berechtigungscode bleibend gespeichert enthält.

Wird der Transponder 9 in die Aufnahme 8 eingebracht, so wird, einen funktionsfähigen Energiespeicher 4 vorausgesetzt, der PIN in den Logikteil 2 eingegeben und im RAM 10 flüchtig gespeichert. Auf eine Abfrage des Fahrzeugs, die mit der Antenne 5 aufgenommen und zum Transponder 9 weitergegeben wird, liest dieser sowohl den Identifizierungs- als auch den Berechtigungscode aus und überträgt diesen über den Schwingkreis 6 und die Antenne 5 auf das Fahrzeug. Sind die beiden Codes identisch mit den dort vorgehaltenen entsprechenden Codes, so erkennt das Fahrzeug, daß es sich um das Mobiltelefon bzw. den Transponder des berechtigten Benutzers handelt und entriegelt das Fahrzeug und/oder bereitet die Inbetriebnahme des Antriebsmotors vor.

Bei einem Wechsel des Energiespeichers 4 und/oder der Entnahme des Transponders 9 aus der Aufnahme 8 bzw. dem erneuten Einsetzen des Transponders 9 in die Aufnahme 8 wird der PIN im RAM des Logikteils 2 zunächst gelöscht und, sofern der Transponder 9 eingesetzt und der Energiespeicher 4 (wieder) wirksam ist, der PIN aus dem Logikteil 2 ausgelesen und erneut im RAM 10 des Transponders 9 gespeichert. Beim erneuten Übertragen wird der dann vorliegende Berechtigungscode zusammen mit dem unveränderlichen Identifizierungscode des Mobiltelefon über die Antenne 5 ausgegeben.

Durch die gemeinsame Übertragung von Berechtigungs- und Identifizierungscode ist es möglich, den Transponder 9 aus dem Mobiltelefon 1 zu entnehmen und in ein anderes Mobiltelefon einzusetzen. Bei diesem wird der dann dort vorliegende, unterschiedliche Identifizierungscode zusammen mit dem fahrzeugindividuellen Berechtigungscode des Transponders 9 zum Fahrzeug übertragen und, sofern dort die beiden Codes vorgehalten sind, der Benutzer wiederum als berechtigt erkannt.

Die Berechtigung erlangt der Benutzer, indem in einem Lernmodus der Identifzierungscode des Mobiltelefons zusammen mit dem im Fahrzeug bereits gespeicherten Berechtigungscode übertragen wird. Der Lernmodus wird beispielsweise dadurch eingestellt, daß ein mechanischer Fahrzeugschlüssel benutzt wird und das Fahrzeug mechanisch geöffnet bzw. ein Zündanlaßschalter mechanisch geschlossen wird.

Dieser Lernmodus ist jedesmal dann erforderlich, wenn der Transponder (mit dem fahrzeugindividuellen Berechtigungscode) in ein neues Mobiltelefon (mit einem neuen Identifizierungscode) eingesetzt wird. Wird hingegen lediglich der Energiespeicher ausgetauscht, so wird durch die erneute Versorgung des Transponders 9 und damit seines flüchtigen Speichers 10 aus dem Energiespeicher 4 der PIN aus dem Logikteil 2 ausgelesen und im RAM 10 des Transponders 9 gespeichert. Beim Übertragen wird erneut der dem Fahrzeug bereits bekannte Berechtigungs- und Identifzierungscode an das Fahrzeug weitergegeben. Ein Batterieaustausch ist somit ohne Auswirkung auf die Funktionsfähigkeit des dargestellten Mobiltelefons 1.

Auf diese Weise ist es möglich, eine mobile Informations- und Kommunikationseinrichtung 1 mit der Funktionalität eines Transponders zu versehen und das Öffnen bzw. die Inbetriebnahme des Fahrzeugs vorzunehmen, ohne hierfür einen separaten Transponder benutzen zu müssen.

## Patentansprüche

1. Verfahren zum Prüfen einer Zugangsberechtigung zu einem Fahrzeug, mit einem Transponder in einer mobilen Informations- und Kommunikationseinrichtung, der einen Berechtigungscode und einen von einem Speicher der Mobilen Informations- und Kommunikationseinrichtung in einen flüchtigen Speicher des Transponders übertragenen Identifizierungscode an das Fahrzeug sendet, wobei eine Einrichtung im Fahrzeug die Zugangsberechtigung erteilt, wenn sowohl der Berechtigungscode als auch der Identifizierungscode mit im Fahrzeug abgespeicherten Werten für den Berechtigungscode und den Identifizierungscode übereinstimmen.

2. Verfahren nach Anspruch 1, **dadurch gekennzeichnet, dass** in einem Lernmodus ein neuer Identifizierungscode zusammen mit dem Berechtigungscode zu dem Fahrzeug übertragen und in einen fahrzeugfesten Speicher eingelesen wird, wobei das Fahrzeug mittels eines mechanischen Fahrzeugschlüssels geöffnet wird.

3. Verfahren nach Anspruch 1, **dadurch gekennzeichnet, dass** in einem Lernmodus ein neuer Identifizierungscode zusammen mit dem Berechtigungscode zu dem Fahrzeug übertragen und in einen fahrzeugfesten Speicher eingelesen wird, wobei ein Zünd-/Anlassschalter mechanisch geschlossen wird.

4. Verfahren nach einem der Ansprüche 1 bis 3, **dadurch gekennzeichnet, dass** bei Entnahme des lösbar in der mobilen Informations- und Kommunikationseinrichtung angeordneten Transponders und/oder bei einem Wechsel des Energiespeichers der mobilen Informations- und Kommunikationseinrichtung der im Transponder gespeicherte Identifizierungscode gelöscht wird.

## Claims

1. A method for checking an access authorisation to a vehicle, comprising a transponder in a mobile information and communication device, which transponder transmits an authorisation code and an identification code transmitted by a memory of the mobile information and communication device into a volatile memory of the transponder, wherein a device in the vehicle grants the access authorisation when both the authorisation code and the identification code match values for the authorisation code and the identification code stored in the vehicle.

2. A method according to claim 1, **characterised in that**, in a learning mode, a new identification code is transmitted to the vehicle together with the authorisation code and is read into a memory fixed in the vehicle, the vehicle being opened by means of a mechanical vehicle key.

3. A method according to claim 1, **characterised in that**, in a learning mode, a new identification code is transmitted to the vehicle together with the authorisation code and is read into a memory fixed in the vehicle, an ignition/starting switch being mechanically closed.

4. A method according to any one of claims 1 to 3, **characterised in that** the identification code stored in the transponder is erased on removal of the transponder detachably arranged in the mobile information and communication device and/or when the energy accumulator of the mobile information and communication device is changed.

## Revendications

1. Procédé de vérification de l'autorisation d'accès d'un véhicule à l'aide d'un transpondeur dans une installation mobile d'informations et de communication, transmettant vers le véhicule un code d'autorisation et un code d'identification transmis par une mémoire de l'installation mobile d'informations et de communication dans une mémoire vive du transpondeur,
une installation du véhicule donnant l'autorisation d'accès si à la fois le code d'autorisation et le code d'identification correspondent aux valeurs enregistrées dans le véhicule pour le code d'autorisation et le code d'identification.

2. Procédé selon la revendication 1,
**caractérisé en ce qu'**
en mode d'apprentissage on transmet un nouveau code d'identification avec le code d'autorisation vers le véhicule et on l'enregistre dans une mémoire fixe du véhicule, ce véhicule s'ouvrant à l'aide d'une clé mécanique.

3. Procédé selon la revendication 1.
**caractérisé en ce qu'**
en mode d'apprentissage on transmet un nouveau code d'identification avec le code d'autorisation vers le véhicule et on l'enregistre dans une mémoire fixe du véhicule, en fermant mécaniquement un mécanisme d'allumage/démarrage.

4. Procédé selon l'une des revendications 1 à 3,
**caractérisé en ce qu'**
à l'extraction du transpondeur installé de manière amovible dans l'installation mobile d'informations et de communication et/ou en cas de changement de l'accumulateur d'énergie de l'installation mobile d'informations et de communication, on efface le code d'identification enregistré dans le transpondeur.
